# EUROPEAN PATENT SPECIFICATION

(11) **EP 0 536 273 B1**
(45) Date of publication and mention of the grant of the patent: **14.12.1994**
(21) Application number: 91912588.0
(22) Date of filing: 28.06.1991
(51) Int. Cl.: G02B 21/00

(54) **APPARATUS AND METHOD FOR TRANSMITTED-LIGHT AND REFLECTED-LIGHT IMAGING**
GERÄT UND METHODE ZUR TRANSMISSIONS- UND REFLEXIONSABBILDUNG
APPAREIL ET PROCEDE DESTINES A L'IMAGERIE PAR TRANSMISSION OU PAR REFLEXION DE LUMIERE

(30) Priority: 29.06.1990 GB 9014570
(43) Date of publication of application: 14.04.1993
(73) Proprietor: DIXON, Arthur Edward, Waterloo, Ontario N2K 3R2 (CA)
(72) Inventor: DIXON, Arthur Edward, Waterloo, Ontario N2K 3R2 (CA)
(74) Representative: Warren, Anthony Robert
(86) International application number: CA9100243
(87) International publication number: WO9200540

(56) References cited:
- EP-A- 0 176 358
- DE-A- 2 818 841
- DE-A- 3 918 412
- US-A-48 930 08
- Applied Optics, vol. 24, no. 5, 1 March 1985, Optical Society of America, (New York, US), Y. Ichioka et al.: "Digital scanning laser microscope", pp 691-696.
- Microelectronic Engineering, vol. 5, nos. 1-4, December 1986, Elsevier Science Publishers B.V., (Amsterdam, NL), Th. Zapf et al.: "Confocal laser microscope for submicron structure measurement", pp 573-580.

## Description

### TECHNICAL FIELD:

This invention relates to the field of scanning optical microscopy and mapping systems, and relates generally to a method and apparatus for forming a confocal or non-confocal image of a specimen using transmitted and/or reflected light. The invention also relates to the fields of fluorescence and photoluminescence microscopy and mapping.

### BACKGROUND OF THE INVENTION:

There is a broad class of scanning microscopes and mapping systems in which a light source is focused to a point on a specimen, and the light reflected (or emitted) from that point is measured by a detector. An image of the specimen is recorded by scanning the illuminated point across the specimen in a raster scan (scanning beam system), or by moving the specimen in a raster scan under a stationary beam (scanning stage system). Scanning stage microscopes are often used when the specimen is large (for example, when an image is required of a whole semiconductor wafer).

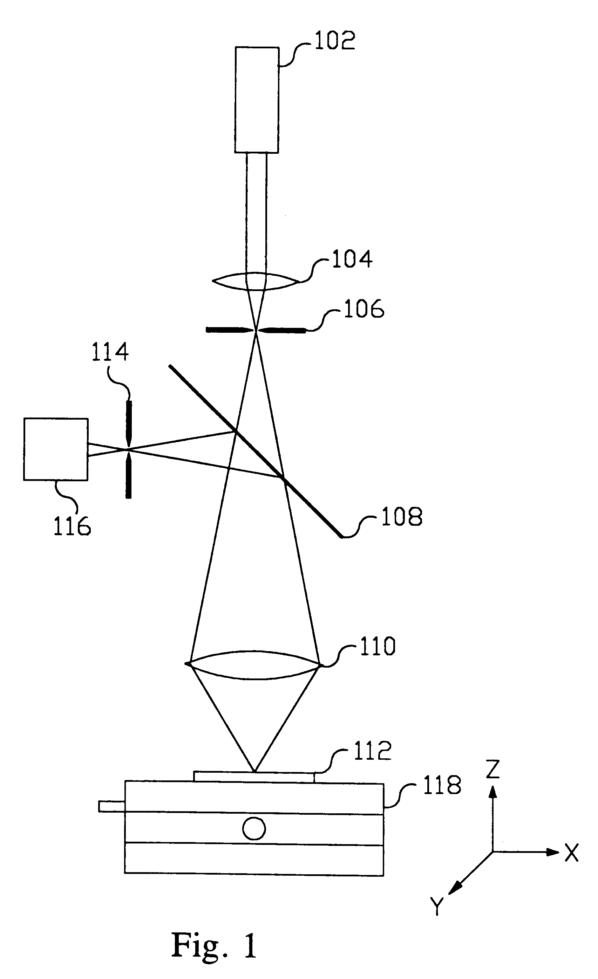

A simple prior art confocal scanning stage laser microscope is shown in Figure 1. In this implementation the beam from laser **102** is focused by lens **104** onto pinhole **106**, and the light passing through pinhole **106** passes through beamsplitter **108** and is focused by objective lens **110** to a focal spot **111** at the surface of (or inside) specimen **112**. For best resolution, focal spot **111** should be diffraction limited. Light reflected from or emitted by the specimen at focal spot **111** is collected by objective lens **110**, and part of this light is reflected by beamsplitter **108** to be focused at detector pinhole **114**. Pinhole **106** and detector pinhole **114** are confocal with focal spot **111**. Light passing through detector pinhole **114** is collected by detector **116**. Reflected light from focal spot **111** at specimen **112** passes through detector pinhole **114**, but light from any other point on the specimen runs into the edges of detector pinhole **114**, and is not collected. This gives the confocal microscope increased resolution over a non-confocal microscope, and since detector pinhole **114** rejects light that does not come from the focal plane, gives the confocal microscope its optical slicing ability, which allows it to record true three dimensional images. The microscope shown in Figure 1 uses scanning stages **118** to move the specimen under the stationary laser beam to record the image, but configurations which scan the beam instead of scanning the specimen are also known. Microscopes using infinity-corrected optics are also common, both in scanning-stage and scanning-beam configurations. These configurations are described in J. Pawley, "The Handbook of Biological Confocal Microscopy", IMR Press, Madison WI 53706 (1989). In addition, it is known that detector pinhole **114** and detector **116** behind it (which together comprise a confocal detector) can be replaced with a small detector whose area is the same as that of detector pinhole **114**.

Scanning stage microscopes have several disadvantages over scanning beam microscopes. The main disadvantage is the increased time required to acquire an image, because scanning the specimen under a fixed beam is inherently slower than scanning the beam. Rapid scanning of the specimen and stages can also cause vibrations in the microscope and/or in the specimen itself which can cause blurring in the acquired image, an additional disadvantage. One advantage of scanning stage microscopes is their ability to perform very large scans with high spatial resolution. One example of such an application is the use of a non-confocal scanning stage microscope for photoluminescence mapping of semiconductor wafers as described by Moore et al, "A Spatially Resolved Spectrally Resolved Photoluminescence Mapping System", Journal of Crystal Growth 103, 21-27 (1990). When scanning optical microscopes are used with large specimens like semiconductor wafers, they are often referred to as "mapping systems" or "mappers".

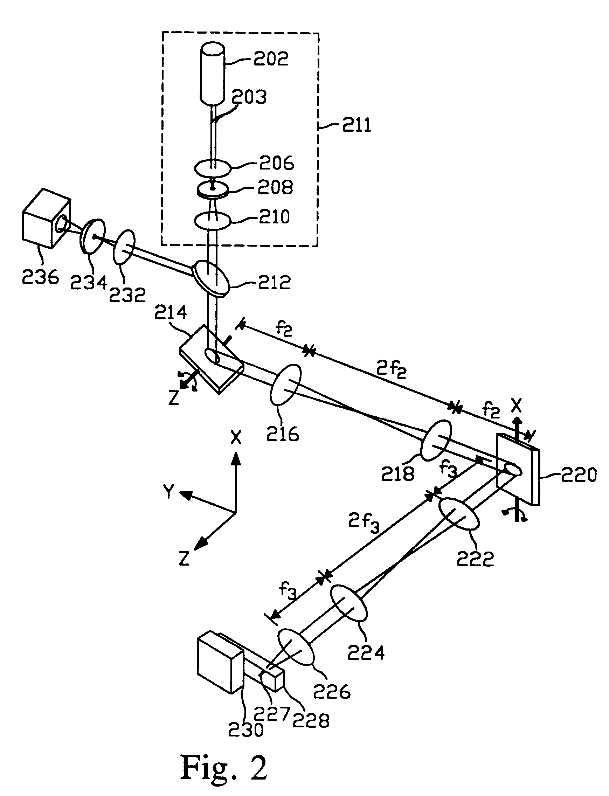

A prior-art infinity-corrected scanning beam confocal microscope is shown in perspective in Figure 2. Light beam **203** from light source **202** is focused on pinhole **208** by lens **206**. The expanding beam exiting pinhole **208** is focused to a parallel beam by lens **210**. (Lens **206**, pinhole **208** and lens **210** constitute a spatial filter and beam expander.) The parallel beam passes through beamsplitter **212** and is deflected in the x-y plane by first scanning mirror **214**, which rotates about an axis parallel to the z-direction. Lenses **216** and **218** of focal length f₂ return the deflected light beam to the center of second scanning mirror **220**, which rotates about an axis parallel to the x-direction and imparts a deflection in the y-z plane. Lenses **222** and **224** of focal length f₃ return the deflected beam (which now has been deflected by both scanning mirrors) to enter objective lens **226** centered on its entrance pupil. Objective lens **226** focuses the light to a focal spot **227** (which for best resolution should be a diffraction-limited spot) at the surface of or inside specimen **228**. The focus position is set by focus stage **230**, which moves in the z-direction. Light reflected back from or emitted by the tiny volume of the specimen at focal spot **227** is collected by objective lens **226** and passes back through the scan system of the microscope. Part of this returning beam is reflected by beamsplitter **212** towards lens **232**. Lens **232** focuses the light onto detector pinhole **234**. Light originating from focal spot **227** in specimen **228** passes through detector pinhole **234** and is detected by detector **236**, light from any other point in specimen **228** hits the metal edges around detector pinhole **234**, and is not detected. As the scanning mirrors **214** and **220** move focal spot **227** across specimen **228**, an image is recorded of features of the specimen that are in the focal plane of objective lens **226**. If the specimen position is changed by moving it toward or away from the objective lens, an image from a different slice through the specimen is recorded.

Several other prior art embodiments of the scanning beam confocal reflected light microscope exist, including microscopes using a single mirror that can be scanned about two perpendicular axes, and microscopes using acousto-optic deflectors as described by Pieter Houpt et al in US Patent #4,863,226.

Another prior art embodiment of a confocal scanning-beam laser microscope uses an acousto-optic deflector to scan the beam in the fast scan direction and a scanning mirror to scan it in the slow scan direction. In this embodiment, the reflected or fluorescence light returning from the specimen is descanned by the mirror in the slow scan direction, and is then reflected toward a confocal detector comprising a linear detector array so no descanning is required in the fast direction. This has the advantage of allowing very high speed scans without having to pass the reflected or fluorescence light back through the acousto-optic deflector, which would considerably reduce the intensity of the light reaching the detector.

Yet another prior-art embodiment of a confocal scanning-beam optical microscope is the class of microscopes known as Nipkow Disk microscopes. The microscopes in this class were described by Gordon Kino in "Efficiency in Nipkow Disk Microscopes", in "The Handbook of Biological Confocal Microscopy", p.93-99 (IMR Press, Madison, WI 53706, edited by J. Pawley). These microscopes are different from the microscopes already described mainly in that a large number of incoming scanning beams are focused on the specimen simultaneously, and reflected or fluorescent light beams from these focused spots are detected simultaneously.

Scanning beam microscopes that are not infinity corrected have also been made. All of these microscopes are often used for fluorescence measurements (see J. Pawley, referred to earlier).

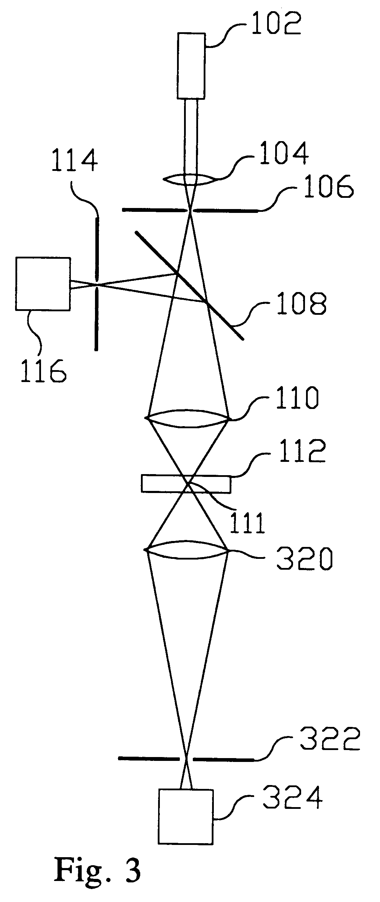

A prior art scanning stage reflection and transmission confocal microscope is shown in Figure 3. In this microscope transmitted light is collected by a second objective lens **320** placed beneath specimen **112**, confocal with the first objective lens **110**. Transmitted light from the focal point is collected by second objective lens **320**, passes through pinhole **322** in front of transmitted-light detector **324**, whereas light from other points in specimen **112** hits the edges of pinhole **322** and does not reach detector **324**. The sample is translated in a raster scan relative to the fixed beam. Thus this microscope performs optical image slicing in transmission as well as in reflection. A scanning stage transmission confocal microscope was described by G.J. Brakenhoff, "Imaging Modes in Confocal Scanning Light Microscopy", Journal of Microscopy 117, 233-242 (1979).

The scanning stage transmission microscope shown in Figure 3 has all of the disadvantages of scanning stage microscopes listed earlier, but this microscope has the advantage of being able to form images in transmission. One disadvantage is that the resolution of both reflection and transmission images becomes progressively poorer as the microscope is focused further beneath the top surface of the specimen. This is caused by spherical abberation in the specimen.

Scanning beam transmission confocal microscopes have been thought to be impractical (see D. Goodman, "Confocal Microscopy", notes from a course at SPIE's 1989 Symposium on Microlithography, San Jose, CA (1989)), since they require precise synchronization of two scan systems, one in the source arm of the microscope, and one in the detector arm, so the source pinhole and detector pinhole are imaged at the same point on the specimen as the scan proceeds. However, one design of a transmission scanning beam microscope has been described in the literature by S. Goldstein, "A No-Moving-Parts Video Rate Laser Beam Scanning Type 2 Confocal Reflected/Transmission Microscope", Journal of Microscopy 153, RP1-RP2 (1989) and in US Patent #4,827,125. Goldstein does not descan the transmitted beam; instead his invention uses an Image Dissector Tube to scan the detector pinhole in synchronism with the scanning transmitted (or reflected) beam. Precise synchronization is difficult and requires sophisticated electronics, and different optical paths must be used for reflected-light and transmitted-light imaging, requiring two complete detector systems. The only practical detector that has been used in this microscope is the image dissector tube, severely limiting the choice of detectors for different applications.

The prior art confocal scanning beam microscopes described herein and in the reference literature are used generally for reflected-light and fluorescence or photoluminescence imaging. These microscopes have several limitations. First, the image-slicing ability of these confocal microscopes enables them to record three-dimensional images, but viewed from one side of the specimen only. Second, when scanning specimens more than a few microns thick, spherical abberation degrades the image as the beam penetrates deeper into the specimen, and the degradation increases with depth. This is true for both reflected-light and fluorescence or photoluminescence imaging. Third, biological specimens are often only weak reflectors, requiring either high levels of illumination or frame averaging to build up an image. Fourth, when fluorescence or photoluminescence measurements are performed using these microscopes, the focus of the microscope may be at a slightly different position for the incoming illumination than it is for the photoluminescence or fluorescence wavelengths emitted by the specimen, since photoluminescence or fluorescence occurs at wavelengths that are different from the exciting wavelength, and the focal length of a microscope objective varies slightly with wavelength.

A scanning beam confocal transmission and reflection microscope is described in German patent DE-A-3918412 by Gunter Schoppe. In this design, a laser beam passes through a first polarizing beamsplitter and a scan system, then passes through a second polarizing beamsplitter and first quarter-wave plate and is reflected by a first mirror towards a first microscope objective, which focuses the light onto a specimen. Light passing through the specimen is collected by a second microscope objective, and is then reflected by a second mirror back through a second quarter-wave plate towards the second polarizing beamsplitter, which reflects the beam back into the scan system, where it is descanned. The beam leaving the scan system is reflected by the first polarizing beamsplitter into a confocal detector. This enables the microscope to record a transmission image of the specimen, illuminated from one side. In order to record a reflection image, the second polarizing beamsplitter is removed, and light reflected from the specimen is collected by the first microscope objective, passes back through the first quarter-wave plate and scan system, and is reflected by the first polarizing beamsplitter towards the confocal detector. This enables the microscope to record a reflection image of the specimen, illuminated from one side only. This microscope design has several limitations: First, because of the considerable distance from the scan system to each of the objective lenses, the maximum scan angle achievable is considerably reduced, when compared to prior art reflection microscopes like that shown in Figure 2. This is an important limitation since recent scanning laser microscope designs use an electronic zoom feature to change the field of view without changing microscope objectives, and is particularly important in a transmission microscope where changing a pair of objectives may require realignment of the microscope. This scan angle can be increased by using large optical components in the scan system, but this increases the size and cost of the microscope. Second, many scanning beam and scanning stage microscopes are based on existing optical microscopes so that the existing eyepieces and white light illumination source can be used to view the specimen prior to laser scanning. The large change in tube length required by this transmission microscope design will require further design changes if eyepieces and a white light illuminating source are used. Third, a further disadvantage of this transmission microscope design is that the specimen plate is tilted at 45 degrees from the main axis of the microscope. A second embodiment is illustrated in the patent with the specimen plane perpendicular to the main axis of the microscope, but this embodiment has an even longer beam path. Fourth, a further disadvantage of this microscope is that it forms an image of the specimen from one side only. Fifth, yet a further disadvantage of this microscope is that it is difficult to reinsert the second beamsplitting cube without realigning the microscope. Sixth, the optical path length between the scan system and the first microscope objective is changed whenever the second beamsplitting cube is removed or inserted, causing a focus change in the microscope.

It is an object of the present invention to provide a practical scanning beam microscope that will record images in both transmission and reflection.

According to the present invention, there is provided a scanning optical transmission, reflection and luminescence microscope as defined in claim 1.

A microscope embodying the present invention can be operated to provide scanning microscope images from both sides of a specimen, in both transmission and reflection, which allows the operator to form a reflected-light image of both the top and bottom of an opaque specimen, thus allowing the microscope to additionally record the bottom half of a three-dimensional image of an opaque specimen. In addition, thus can reduce the effect of spherical abberation by allowing the operator to illuminate the specimen with a beam that impinges on the specimen from the side closest to the focal plane. Thus, a beam from the top can be chosen when imaging the top half of a specimen, and one from the bottom when imaging the bottom half.

In one embodiment of this invention, there is provided a scanning-beam photoluminescence or fluorescence microscope in which the incoming illumination is focused by one objective lens and the fluorescence or photoluminescence emitted by the specimen is collected by the second objective lens, which now can be placed at a proper focal distance to collect light at the fluorescence or photoluminescence wavelength emitted from the illuminated spot in the specimen.

This invention may be applied to a scanning beam laser microscope or mapping system, that allows the operator to choose any of four operating modes for the microscope: transmission with illumination from the top of the specimen, transmission with illumination from the bottom of the specimen, reflection from the top, and reflection from the bottom, in addition to being able to use the microscope for fluorescence or photoluminescence imaging.

This invention may be applied to a scanning stage microscope, or one using a scanning stage in one direction and a scanning beam in the other, that will provide any of the capabilities described above.

### BRIEF DESCRIPTION OF THE DRAWINGS:

Figure **1** is a simplified side view of a scanning stage confocal reflection microscope of the prior art.

Figure **2** is a simplified perspective view of an infinity-corrected scanning beam confocal laser reflection microscope of the prior art.

Figure **3** is a simplified side view of a confocal scanning stage reflection/transmission microscope of the prior art.

Figure **4** is a simplified side view of one embodiment of the present invention, an infinity-corrected confocal scanning stage reflection and transmission optical microscope.

Figure **5** is a simplified side view of another embodiment of the present invention, a non-infinity-corrected confocal scanning stage reflection and transmission microscope.

Figure **6** is a simplified side view of a further embodiment of the present invention, an infinity-corrected scanning optical transmission and reflection microscope in which analyzers are used to select separately each of four imaging modes of the microscope.

Figure **7** is a simplified side view of one embodiment of the objective lens and transmission arm assembly of an infinity-corrected confocal scanning beam laser transmission and reflection microscope.

Figure **8** is a simplified perspective view of the preferred embodiment of the present invention, an infinity-corrected confocal scanning beam optical transmission and reflection microscope.

Figure **9** is a simplified side view of one embodiment of the objective lens and transmission arm assembly of a non-infinity-corrected confocal scanning beam optical transmission and reflection microscope.

### DESCRIPTION OF THE INVENTION:

The present invention is a practical scanning microscope that can be used for reflected-light and transmitted-light imaging and for fluorescence or photoluminescence imaging. Both scanning stage and scanning beam versions will be described.

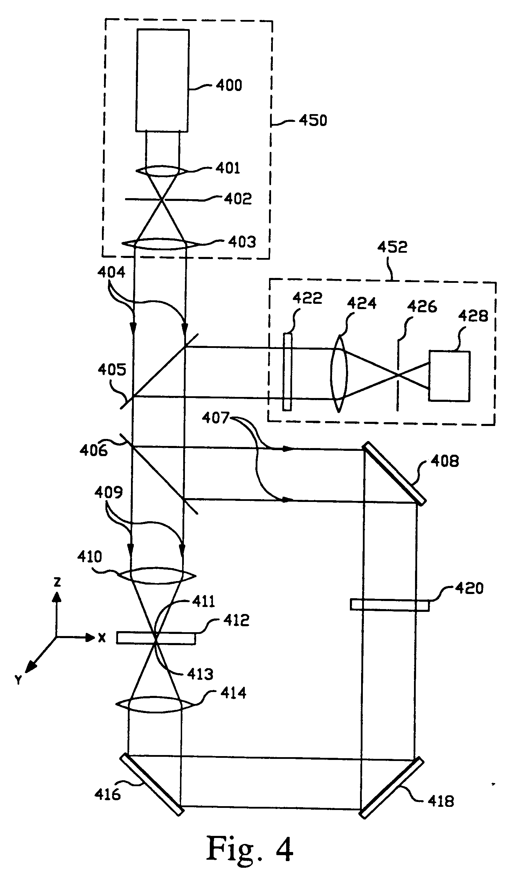

Figure 4 shows one embodiment of the invention, a transmitted-light and reflected-light confocal microscope using a pair of scanning stages to move the specimen in a raster scan in x and y directions under the stationary laser beam. A third stage moves the specimen in the z (axial) direction to change the focus position with respect to the specimen. (These stages are not shown in the diagram and this arrangement of scanning stages and focusing stage is known in the art). In this embodiment of the invention, incoming parallel light beam **404** of polarized light (from light source **450** comprising laser **400** (or other polarized light source) and spatial filter comprised of lens **401**, pinhole **402** and lens **403**) passes through first beamsplitter **405** and impinges on the second beamsplitter **406**. (Part of the light beam, reflected to the left by first beamsplitter **405**, is lost). At second beamsplitter **406**, part of the the light beam (light beam **407**) is reflected toward mirror **408** and part is transmitted (light beam **409**) toward first objective lens **410**.

Light beam **409** entering first objective lens **410** is focused to a focal spot **411** at the focal point of that lens at the surface of, or inside, specimen **412**. Light transmitted through the specimen is collected by second objective lens **414** (whose focal spot **413** is at the same position as focal spot **411** of first objective lens **410**), is reflected through 90 degrees by mirror **416** and through 90 degrees by mirror **418**, passes through half-wave plate **420**, which rotates the polarization of the light beam by 90 degrees, is reflected through 90 degrees by mirror **408** and partially reflected by beamsplitter **406** toward beamsplitter **405**. It is then partially reflected by beamsplitter **405** and enters the detection arm **452** of the microscope. It then passes through analyzer **422** and is focused by lens **424** to pass through detector pinhole **426** to reach detector **428**. Detector pinhole **426** is confocal with the focal spot of the two objective lenses **410** and **414**, and rejects light coming from all points in specimen **412** other than the coincident focal spots **411** and **413** of objective lenses **410** and **414**.

Light reflected by beamsplitter **406** toward mirror **408** (light beam **407**) is reflected through 90 degrees by mirror **408**, passes through half-wave plate **420** where its polarization is rotated by 90 degrees, is reflected through 90 degrees by mirror **418** and through a further 90 degrees by mirror **416**, and is focused to focal spot **413** (coincident with focal spot **411**) by objective lens **414**. Light transmitted upward through specimen **412** is collected by objective lens **410**, then is partially reflected and partially transmitted by beamsplitter **406** (the part reflected to the left is lost). The transmitted portion travels back up the microscope, and is partially reflected by beamsplitter **405** to enter detection arm **452**. The other part of the light beam is transmitted through beamsplitter **405** and is lost. In detection arm **452** the light beam passes through analyzer **422**, and is focused by lens **424** to pass through pinhole **426** to reach detector **428**. Note that both light beam **409**, which is transmitted through specimen **412** from above, and light beam **407**, which is transmitted through specimen **412** from below, pass through half-wave plate **420** once before reaching detection arm **452**, and have the same polarization as they enter analyzer **422**.

At the same time, light reflected by specimen **412** also travels back to detector **428**. When light beam **409**; impinges on specimen **412** from above, light reflected by specimen **412** is collected by objective lens **410**, and travels as a parallel light beam back to beamsplitter **405**, where it is partially reflected to enter detection arm **452**. Light beam **407** passes through half-wave plate **420** before entering specimen **412** from below, and light reflected from specimen **412** passes back through half-wave plate **420** again on its way back to detection arm **452**. Thus the part of light beam **407** reflected back from specimen **412** passed through half-wave plate **420** twice as it traveled through the microscope, so it has the same polarization as the reflected-light portion of light beam **409** when the two beams enter detection arm **452**, but is polarized at 90 degrees to the polarization of the two transmitted-light beams when they enter detection arm **452**. Analyzer **422** can be rotated to select either light transmitted by specimen **412** or light reflected from specimen **412**. Since the best resolution is achieved when focal spots **411** and **413** are as small as possible, a good choice for objective lenses **410** and **414** is a pair of identical high quality infinity-corrected microscope objectives. The optical assembly comprising second objective lens **414**, mirrors **416**, **418**, and **408**, beamsplitter **406** and half-wave plate **420** is called the transmission arm of the microscope.

When the specimen thickness changes, the relative positions of objective lenses **410** and **414** must be changed slightly so they will remain confocal. This can be accomplished by moving objective lens **414** up or down while observing the signal from detector **428** with analyzer **422** set to select transmitted light. There will be a maximum in the detected signal when objective lenses **410** and **414** are confocal.

This microscope has several advantages over the prior art. By rotating analyzer **422**, either reflected or transmitted light can be detected by the same detector. In addition, the microscope detects light reflected from both the top and bottom of a specimen, thus forming a confocal image which contains reflected-light information from both the top and bottom of the specimen.

The microscope can also be used for fluorescence or photoluminescence imaging, which does not require a polarized light source. One possible implementation would be to replace beamsplitter **405** with a dichroic beamsplitter that transmits the source wavelength, but reflects the longer fluorescence or photoluminescence wavelengths. In this implementation, fluorescent or photoluminescent light from specimen **412** is reflected by beamsplitter **405** to enter the detection arm **452**. Since the fluorescent or photoluminescent light is not polarized, analyzer **422** can be removed. All of the photoluminescence or fluorescence wavelengths would then be detected simultaneously. Spectrally-resolved detection systems can be implemented if measurement of a complete spectrum is required.

A second possible implementation of the microscope for fluorescence or photoluminescence imaging can be accomplished by replacing beamsplitter **406** with a dichroic beamsplitter. If a dichroic beamsplitter is chosen that transmits the source wavelength and reflects the longer fluorescence or photoluminescence wavelengths, then second objective lens **414** can be focused at the proper distance to collect light at the longer fluorescence or photoluminescence wavelength of interest, while first objective lens **410** is focused at the correct distance for the source wavelength. In this embodiment light goes around the transmission arm in only one direction. This method can also be used with the scanning beam embodiments described later.

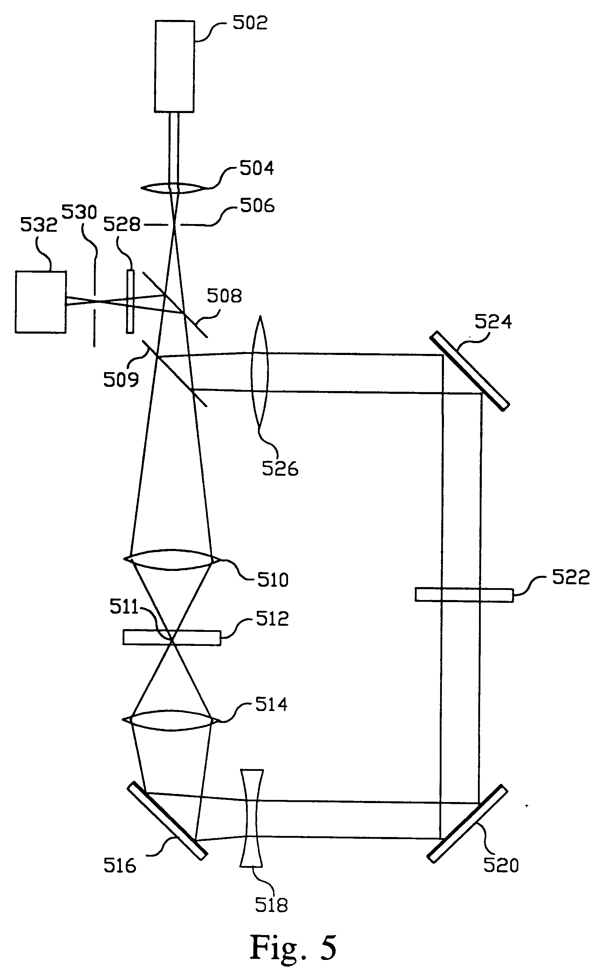

An additional embodiment of the invention is shown in Figure 5, where a similar transmission arm is implemented in a non-infinity-corrected microscope. In this particular embodiment, lenses **518** and **526** are chosen to provide parallel beams for the optical components (mirror **520**, analyzer **522**, and mirror **524**) that steer the beams around the specimen. Beamsplitter **509** performs the same function as beamsplitter **406** in the microscope described in Figure 4, and beamsplitter **508** directs light returning from the sample into the detection arm of the microscope. In this embodiment an additional lens is not required to focus the returning beam onto pinhole 530.

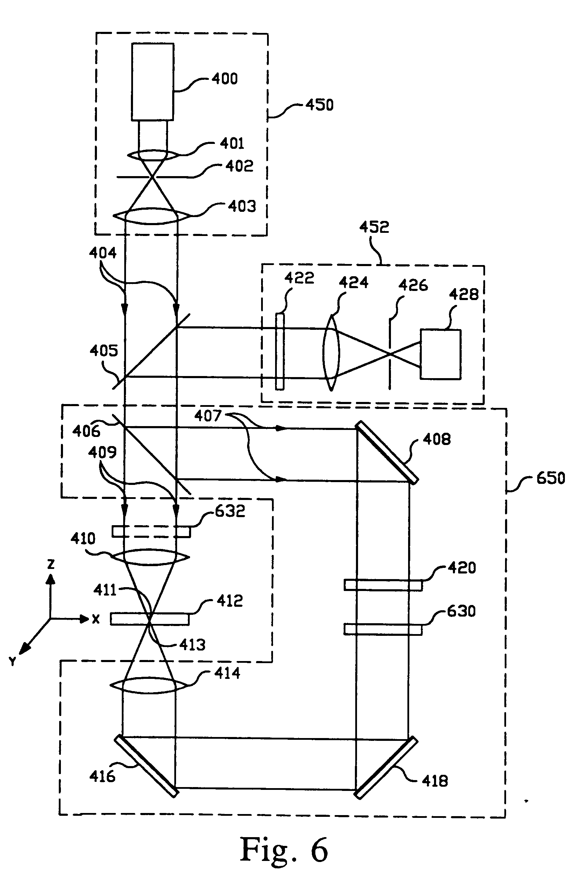

A further embodiment of the invention is shown in Figure 6. This embodiment is the same as that shown in Figure 4, with the addition of analyzer **630**, which is shown just below half-wave plate **420** (several other positions are possible). If analyzer **630** has its polarization axis parallel to that of the original polarized light beam **404** entering the microscope, then light beam **409** after transmission through specimen **412** passes through analyzer **630**, has its polarization rotated 90 degrees by half-wave plate **420**, and continues through the microscope to enter detection arm **452**. At the same time, light beam **407** which is traveling clockwise around the transmission arm **650** has its polarization rotated 90 degrees by half-wave plate **420** before it reaches analyzer **630**, and light beam **407** is not transmitted by analyzer **630**. Analyzer **422** can then be used to select either transmitted light that enters specimen **412** from above, or light reflected from the top of specimen **412**. If analyzer **630** is now rotated so that its polarization axis is perpendicular to that of light beam **404** entering the microscope, analyzer **422** then selects transmitted light that entered specimen **412** from below. When analyzer **422** is then rotated by 90 degrees, it selects reflected light from both sides of specimen **412**. If a third analyzer 632 is placed just above objective lens **410** with its polarization axis perpendicular to that of incoming light beam **404**, it stops light beam **409** from entering objective lens **410**, and thus stops the reflected-light signal from above, without interfering with either the transmitted-light or reflected-light signals originating from light beam **407** that entered specimen **412** from below. The additional advantage of the embodiment described in this paragraph is that it allows each of the four returning beams to be detected separately, whereas in the previous embodiments, either both reflected beams or both transmitted beams reached detector **428** at the same time, and interference effects could change the measured image. By comparing results from the single beam case (as just described) and the two-beam case with analyzers **630** and **632** removed, the interference effects can be determined, and this may be a useful contrast mechanism. In addition, this allows the operator to choose a beam from the top when imaging the top half of the specimen, or a beam from the bottom when imaging the bottom half of the specimen, thereby reducing the effect of spherical abberation on the image.

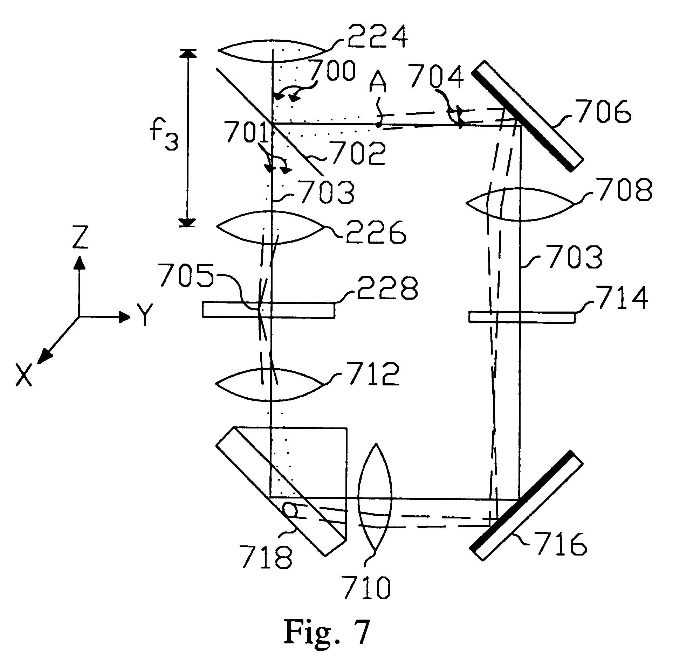

The techniques described above to make a scanning stage transmission and reflection laser microscope can be extended to make a scanning beam system. Here the challenge is to design an optical system that divides the incoming laser beam into two parts. just before it enters objective lens **226** of Figure 2, and steers one part of the incoming beam around the specimen to enter a second objective lens below the specimen at exactly the correct angle so that the focal spots from the two lenses remain coincident as the scan proceeds. In addition, it must be possible to move the two objective lenses closer together or farther apart to compensate for the change of optical path length with sample thickness. One embodiment of such a beam-steering arrangement (or transmission arm) is shown in Figure 7. In this diagram, lenses **224** and **226** denote the same lenses as they did in Figure 2. In Figure 7, dashed lines represent a beam above the plane of the diagram, and dotted lines represent a beam that is below the plane of the diagram. The light beam **700** has already passed through the scan system of the microscope shown in Figure 2, and is shown in Figure 7 approaching lens **226** as a parallel beam (light beam **701**) that is below the plane of the diagram and to the right of optic axis **703** (solid line), and is traveling upward toward the plane of the diagram and to the left to enter first objective lens **226** just as light beam **700** crosses optic axis **703**. Objective lens **226** focuses this incoming parallel beam to a focal spot **705** at the position of specimen **228**. Part of incoming light beam **700** is reflected by beamsplitter **702** (light beam **704**) toward mirror **706**, and passes through the optic axis at A, a distance of f3 from lens **224**, measured along the optic axis. On the diagram, the dots become dashes at this position. The beam is then reflected by mirror **706** toward lens **708**. The lenses **708** and **710** have the same focal length (f4); lens **708** is placed a distance equal to its focal length (f4) from the point A where the beam crossed the optic axis, and a distance equal to twice its focal length from lens **710**, which is a distance equal to its focal length (f4) in front of second objective lens **712**. All of these distances are measured along the optic axis **703** of the transmission arm of the microscope. After the beam passes through lens **708**, it passes through half-wave plate **714** which rotates its polarization by 90 degrees. It is then reflected toward lens **710** by mirror **716**. Lens **710** converts the diverging beam into a parallel beam and bends it toward the optic axis. It then passes through roof prism **718** which reflects the beam towards second objective lens **712** and also reverts the beam (moving it from above the plane of the diagram to below the plane). It enters second objective lens **712** at the axis, and is focused by objective lens **712** to exactly the same focal point **705** in specimen **228** as the focal point of the beam entering specimen **228** from the top, coming through objective lens **226**. The total optical path length along the axis, measured from the position of lens **224** to second objective lens **712** around the transmission arm is f3+f4+2f4+f4=f3+4f4. Other optical arrangements are possible. For example, the position of roof prism **718** can be exchanged with the position of either mirror **706** or mirror **716**. Also, other combinations of optical elements are possible. For example, if roof prism **718** is replaced by a mirror at the same position, a reversion prism can be placed in the transmission arm to revert the beam. One possible position for the reversion prism is between mirror **716** and half-wave plate **714**. The focal length of lens **708** and lens **710** is chosen to provide enough distance around the beam-steering arm for placement of optical components, and to allow axial focus adjustment of second objective lens **712** to allow for different specimen thicknesses. If objective lens **712** is moved to change focus, the other components in the transmission arm must be moved in such a way as to maintain the distances between second objective lens **712** and lens **710**, lens **710** and lens **708**, and lens **708** and objective lens **226**, measured along the axis. In this embodiment, the specimen is mounted on a stage (not shown) that can be moved in the focus direction (toward or away from objective lens **226**) after each raster scan is complete, in order to change the scan plane in the specimen.

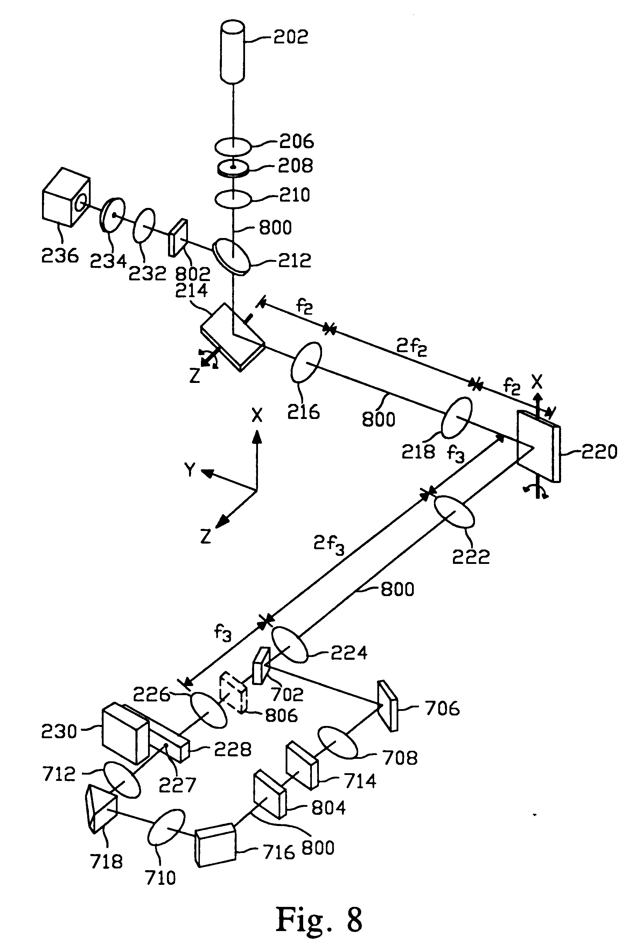

Figure 8 shows the preferred embodiment of the transmission/reflection confocal microscope incorporating the transmission arm described in Figure 7. If light source **202** is polarized, analyzer **804** when combined with half-wave plate **714** allows the operator to select light traveling either clockwise or counterclockwise around the transmission arm, and when used in conjunction with analyzer **802** at the entrance of the detection arm in front of the detector and analyzer **806** above objective lens **226**, any of four imaging modes can be selected separately, exactly as described for the scanning-stage embodiment shown in Figure 6. If analyzer **806** and analyzer **804** are both rotated so their polarization direction is parallel to the polarization of the incoming light beam, then analyzer **802** passes light reflected from the top of specimen **228** when it's polarization is parallel to the polarization of the light beam, and it passes light transmitted from top to bottom through specimen **228** (in the direction from lens **226** toward lens **712**) when it's polarization is perpendicular to that of the incoming light beam. If the polarization directions of analyzer **806** and analyzer **804** are both rotated by 90 degrees (to a position perpendicular to the polarization of the incoming light beam) then analyzer **802** can be used to select either light reflected from the bottom of specimen **228** or light transmitted upwards through specimen **228** (in the direction from lens **712** towards lens **226**).

Many other optical combinations are possible. For example, if the microscope of Figure 8 will be used only in a reflection mode, then analyzers **802**, **806**, and **804** and half-wave plate **714** can be removed. Then reflection from the top can be chosen by blocking off the beam traveling from beamsplitter **702** toward mirror **706**, or reflection from the bottom can be chosen by blocking off the beam traveling from beamsplitter **702** towards objective lens **226**.

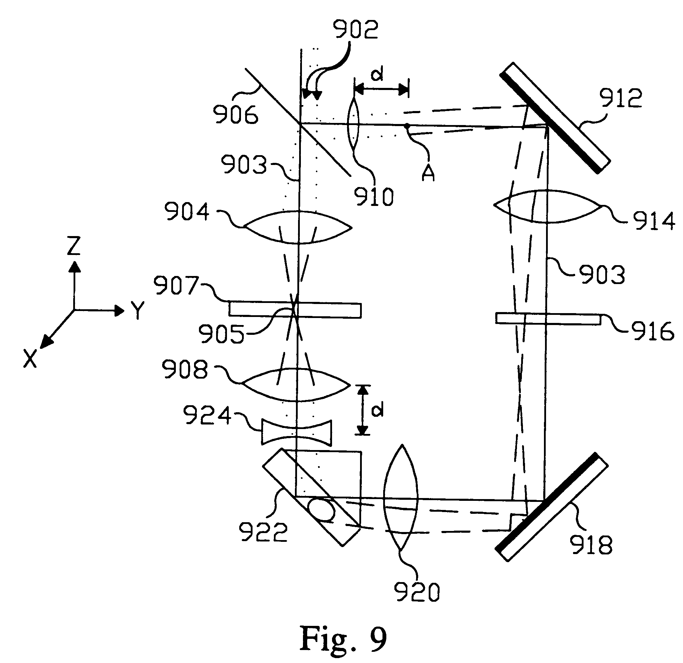

The transmission arm shown in Figure 7 is designed for an infinity-corrected scanning beam microscope, and must be changed to suit a non-infinity-corrected scanning beam microscope. One embodiment of the transmission arm for a non-infinity-corrected scanning beam transmitted-light and reflected-light confocal microscope is shown in Figure 9. In a non-infinity-corrected confocal scanning optical microscope, the polarized light beam **902** has already passed through the microscope scan optics (not shown), and approaches objective lens **904** expanding from a point above the objective lens. Beamsplitter **906** is inserted above objective lens **904** to reflect part of the incoming beam into the transmission arm that will steer the beam around specimen **907** to enter a second objective lens **908** which is identical to and confocal with objective lens **904**. The lens **910** is inserted into the expanding partially-reflected beam before it has expanded to the diameter it will reach when entering second objective lens **908**. The focal length of lens **910** is chosen to collimate the expanding beam. The collimated beam passes through the beam-steering optics as before, and passes through negative lens **924**, which has the same (but negative) focal length as lens **910**. Negative lens **924** is placed a distance d in front of objective lens **904** so the expanding beam entering second objective lens **908** has the same diameter as that entering objective lens **904**. Both objective lenses **904** and **908** are focused at the same focal spot **905** inside specimen **907**. If this transmission arm is used to enable transmitted-light imaging in a Nipkow Disk microscope, half-wave plate **916** should be removed, since some versions of these microscopes use a half-wave plate to reduce reflections in the optical system.

From the foregoing description it will be appreciated that the invention makes available a scanning optical transmission and reflection microscope with many advantages over the prior art. These advantages were listed as a series of objects of the invention. All of the objects have been achieved. An additional advantage is that all the images from the different imaging modes of the microscope are in perfect registration.

## Claims

1. A scanning optical transmission, reflection and luminescence microscope having:
an illumination source (202;400) for producing a light beam (404) directed along an optical path (800) toward a specimen (228;412);
a first microscope objective (226;410) in the optical path for focusing the light beam (404) to produce an illuminated spot (227) in a prescribed specimen plane;
means (230) for supporting the specimen (228) to be observed and measured;
means (214;220) for scanning the prescribed specimen plane with said focused illuminated spot (227) in a predetermined scan pattern;
said microscope being characterized by:
a transmission arm (650) having:
a second microscope objective (712;414) placed on the opposite side of the specimen plane, and coaxial with the first microscope objective (226;410), at such a distance that the focal planes of the two microscope objectives (226, 712;410,414) coincide;
a second beamsplitter (702;406) placed between the illumination source (202;400) and the first microscope objective (226;410), oriented at 45 degrees to the optical path (800), so that the light beam (700;404) is divided into a first and a second light beam (704,701;407,409);
an optical subassembly comprising reflection means (706,716,718;408,416,418) arranged so that said first microscope objective (226;410) can focus the second light beam (701;409) at the same position in the sample as said second microscope objective (712;414) can focus the first light beam (704;407), and further arranged to inject the transmitted light back into said optical path (800) utilizing said second beamsplitter (702;406), whereby the specimen can be illuminated by light beams travelling in two opposite directions, a first direction and a second direction, around said transmission arm (650);
so that the light travelling in said second direction transmitted through the specimen is collected by said second microscope objective (712;414), and the transmitted light beam is injected back into the optical path (800) above said first microscope objective (226;410), so that the injected light beam is exactly parallel with, coaxial with and travelling in the same direction as the reflected light beam from the specimen that has been collected by said first microscope objective (226;410), and further so that light travelling in said first direction transmitted through the specimen is collected by said first microscope objective (226,410), and light travelling in said first direction that is reflected by the specimen is collected by said second microscope objective (712;414) and is injected back into the optical path (800) above said first microscope objective (226;410), so that the injected light beam is exactly parallel with, coaxial with and travelling in the same direction as the transmitted light beam that was collected by said first microscope objective (226;410);
a first beamsplitter (212;405) partially reflecting the transmitted and reflected light beams towards a detection arm (452) having:
a detector (236;428) which can receive both reflected-light and transmitted-light beams resulting from each direction of illumination of the specimen plane.

2. A microscope according to Claim 1 wherein said detection arm (452) further comprises a pinhole (234;426) and a focusing lens (232;424) for obtaining a focal point for confocal detection of the reflected and transmitted light, so that said microscope is a confocal microscope.

3. A microscope according to Claim 1 or 2 wherein the means for scanning (214;220) are scanning the light beam and wherein the optical subassembly further comprises two focusing means (703;710) and wherein one of the reflection means is a reversion means (718), so that said microscope is a scanning beam microscope.

4. A microscope according to Claim 1 or 2 wherein the means for scanning are means for translating the specimen (412) so that said microscope is a scanning stage microscope.

5. A microscope according to Claim 3 or 4 wherein said illumination source (202;400) is a polarized illumination source; and
said detection arm (452) further comprises a first analyzer (801;422); and
said optical subassembly in said transmission arm (650) further comprises a half-wave plate (714;420);
whereby the light beam has its polarization rotated 90 degrees by the half-wave plate so that either reflected-light or transmitted-light imaging from both sides of said specimen (228;412) can be selected by rotating said first analyzer (802;422).

6. A microscope according to Claim 5 further comprising: a second analyzer (804;630), placed in said optical subassembly in said transmission arm (650);
whereby in conjunction with said half-wave plate (714;420), either light travelling in said first direction or in said second direction can be selected;
a third analyzer (806;632), placed between said beamsplitter (702;406) and said first microscope objective (226;410);
whereby, in conjunction with said first analyzer in said detection arm of the microscope, any of four imaging modes can be selected: reflected light from above, reflected light from below, transmitted light from above, or transmitted light from below.

## Patentansprüche

1. Optisches Transmissions-, Reflexions- und Lumineszenz-Rastermikroskop mit:
einer Lichtquelle (202; 400) zum Erzeugen eines entlang eines Lichtweges (800) auf eine Probe (228; 412) gerichteten Lichtstrahls (404); einem ersten Mikroskopobjektiv (226; 410) im Lichtweg zum Fokussieren des Lichtstrahls (404), um einen Lichtpunkt (227) in einer festgelegten Probenebene zu erzeugen;
Mitteln (230) zum Tragen der zu beobachtenden und zu messenden Probe (228);
Mitteln (214; 220) zum Abtasten der festgelegten Probenebene mit dem genannten fokussierten Lichtpunkt (227) in einem vorbestimmten Abtastmuster;
wobei das genannte Mikroskop gekennzeichnet ist durch:
einen Transmissionsarm (650) mit:
einem zweiten Mikroskopobjektiv (712; 414), das auf der der Probenebene gegenüberliegenden Seite und koaxial mit dem ersten Mikroskopobjektiv (226; 410) in einem solchen Abstand angeordnet ist, daß die Brennpunktebenen der beiden Mikroskopobjektive (226, 712; 410, 414) zusammenfallen;
einem zweiten Strahlenteiler (702; 406), der zwischen der Lichtquelle (202; 400) und dem ersten Mikroskopobjektiv (226; 410) in einem 45°-Winkel zum Lichtweg (800) ausgerichtet angeordnet ist, so daß der Lichtstrahl (700; 404) in einen ersten und einen zweiten Lichtstrahl (704, 701; 407, 409) geteilt wird;
einer optischen Unteranordnung, die Reflexionsmittel (706, 716, 718; 408, 416, 418) umfaßt, die so angeordnet sind, daß das genannte erste Mikroskopobjektiv (226; 410) den zweiten Lichtstrahl (701; 409) an derselben Stelle in der Probe fokussieren kann, an der das genannte zweite Mikroskopobjektiv (712; 414) den ersten Lichtstrahl (704; 407) fokussieren kann, und die weiterhin angeordnet sind, um das durchgelassene Licht unter Verwendung des genannten zweiten Strahlenteilers (702; 406) in den genannten Lichtweg (800) zurückzuwerfen, wodurch die Probe von in zwei entgegengesetzte Richtungen, einer ersten Richtung und einer zweiten Richtung, um den genannten Transmissionsarm (650) laufenden Lichtstrahlen beleuchtet werden kann;
so daß das in die zweite Richtung laufende, durch die Probe durchgelassene Licht von dem genannten zweiten Mikroskopobjektiv (712; 414) gesammelt und der durchgelassene Lichtstrahl zurück in den Lichtweg (800) über dem genannten ersten Mikroskopobjektiv (226; 410) geworfen wird, so daß der zurückgeworfene Lichtstrahl genau parallel und koaxial zu dem von der Probe reflektierte Lichtstrahl, der von dem genannten ersten Mikroskopobjektiv (226; 410) gesammelt wurde, ist und in derselben Richtung läuft, und daß weiterhin in die genannte erste Richtung laufendes, durch die Probe durch gehendes Licht von dem genannten ersten Mikroskopobjektiv (226, 410) gesammelt und in die genannte erste Richtung laufendes Licht, das von der Probe reflektiert wird, von dem genannten zweiten Mikroskopobjektiv (712; 414) gesammelt und in den Lichtweg (800) über dem genannten ersten Mikroskopobjektiv (226; 410) zurückgeworfen wird, so daß der zurückgeworfene Lichtstrahl genau parallel und koaxial zu dem durchfallenden Lichtstrahl, der von dem genannten ersten Mikroskopobjektiv (226; 410) gesammelt wurde, ist und in dieselbe Richtung läuft;
einem ersten Strahlenteiler (212; 405), der teilweise die durchgelassenen und reflektierten Lichtstahlen zu einem Detektionsarm (452) hin reflektiert, der
einen Detektor (236; 428) aufweist, der sowohl Strahlen aus reflektiertem Licht als auch Strahlen aus durchgelassenem Licht empfangen kann, die aus jeder Beleuchtungsrichtung der Probenebene resultieren.

2. Mikroskop nach Anspruch 1, bei dem der genannte Detektionsarm (452) weiterhin ein kleines Loch (234; 426) und eine Fokussierlinse (232; 424) zum Erhalten eines Brennpunktes für eine konfokale Detektion des reflektierten und durchfallenden Lichts umfaßt, so daß das genannte Mikroskop ein konfokales Mikroskop ist.

3. Mikroskop nach Anspruch 1 oder 2, bei dem die Mittel zum Abtasten (214; 220) den Lichtstrahl abtasten und bei dem die optische Unteranordnung weiterhin zwei Fokussiereinrichtungen (703; 710) umfaßt und bei der eines der Reflexionsmittel eine Bildumkehreinrichtung (718) ist, so daß das genannte Mikroskop ein Rasterstrahlenmikroskop ist.

4. Mikroskop nach Anspruch 1 oder 2, bei dem die Mittel zum Abtasten Mittel zum Verschieben der Probe (412) sind, so daß das genannte Mikroskop ein Scanningtischmikroskop ist.

5. Mikroskop nach Anspruch 3 oder 4, bei dem die genannte Lichtquelle (202; 400) eine polarisierte Lichtquelle ist; und
der genannte Detektionsarm (452) weiterhin einen ersten Analysator (801; 422) umfaßt; und
die genannte optische Unteranordnung in dem genannten Transmissionsarm (650) weiterhin ein Halbwellenplättchen (Lambda-Halbe-Plättchen) (714; 420) umfaßt;
wodurch die Polarisation des Lichtstrahls durch das Lambda-Halbe-Plättchen um 90° gedreht wird, so daß entweder die Reflexions- oder die Transmissionsabbildung von beiden Seiten der genannten Probe (228; 412) durch Drehen des genannten ersten Analysators (802; 422) ausgewählt werden kann.

6. Mikroskop nach Anspruch 5, das weiterhin umfaßt:
einen zweiten Analysator (804; 630), der in der optischen Unteranordnung in dem genannten Transmissionsarm (650) angeordnet ist;
wodurch in Verbindung mit dem genannten Lambda-Halbe-Plättchen (714; 420) entweder in der genannten ersten Richtung oder in der genannten zweiten Richtung laufendes Licht ausgewählt werden kann; einen dritten Analysator (806; 632), der zwischen dem genannten Strahlenteiler (702; 406) und dem genannten ersten Mikroskopobjektiv (226; 410) angeordnet ist;
wodurch in Verbindung mit dem genannten ersten Analysator in dem genannten Detektionsarm des Mikroskops einer von vier Abbildungsmodi ausgewählt werden kann: reflektiertes Licht von oben, reflektiertes Licht von unten, durchgelassenes Licht von oben oder durchgelassenes Licht von unten.

## Revendications

1. Microscope optique à balayage à transmission, réflexion et luminescence, comportant:
- une source lumineuse (202, 400) pour produire un faisceau de lumière (404) dirigé le long d'un chemin optique (800) en direction d'un spécimen (228 ; 412) ;
- un premier objectif de microscope (226 ; 410) disposé dans le chemin optique pour focaliser le faisceau de lumière (404) pour produire un spot lumineux (227) dans un plan de spécimen déterminé;
- des moyens (230) pour supporter le spécimen (228) à observer et à mesurer;
- des moyens (214 220) pour balayer le plan de spécimen déterminé avec ledit spot lumineux focalisé (227) selon un schéma de balayage prédéterminé;
ledit microscope étant caractérisé par**:**
· un bras de transmission (650) comportant:
- un second objectif de microscope (712 ; 414) placé sur le côté opposé du plan de spécimen, et coaxial avec le premier objectif de microscope (226; 410), à une distance telle que les plans focaux des deux objectifs de microscopes (226, 712; 410,414) coïncident;
- un second séparateur de faisceaux (702 ; 406) placé entre la source lumineuse (202; 400) et le premier objectif de microscope (226; 410), orienté à 45 degrés par rapport au chemin optique (800), de sorte que le faisceau de lumière (700; 404) est divisé en un premier et un second faisceau de lumière (704, 701 ; 407, 409);
- un sous-ensemble optique comprenant des moyens de réflexion (706, 716, 718; 408,416,418) arrangé de telle sorte que ledit premier objectif de microscope (226, 410) peut focaliser le second faisceau de lumière (701; 409) au même endroit dans l'échantillon auquel ledit second objetctif de microscope (712 ; 414) peut focaliser le premier faisceau de lumière (704 ; 407), et arrangé en outre pour réinjecter la lumière transmise dans ledit chemin optique (800) en utilisant ledit second séparateur de faisceaux (702 ; 406), le spécimen pouvant être illuminé par les faisceaux de lumière se déplaçant dans deux directions opposées, une première direction et une seconde direction, autour dudit bras de transmission (650);
- de sorte que la lumière se déplaçant dans ladite seconde direction transmise à travers le spécimen est collectée par ledit second objectif de microscope (712; 414), et le faisceau de lumière transmis est réinjecté dans le chemin optique (800) au-dessus dudit premier objectif de microscope (226 ; 410), de sorte que le faisceau de lumière est exactement parallèle à, coaxial avec et se déplace dans la même direction que le faisceau de lumière réfléchi à partir du spécimen qui a été collecté par ledit premier objectif de microscope (226 ; 410), et en outre de sorte que la lumière se déplaçant dans ladite première direction transmise à travers le spécimen est collecté par ledit premier objectif de microscope (226; 410), et la lumière se déplaçant dans ladite première direction qui est réfléchie par le spécimen est collectée par ledit second objectif de microscope (712; 414) et est réinjectée dans le chemin optique (800) au-dessus dudit premier objectif de microscope (226 ; 41()), de sorte que le faisceau de lumière injecté est exactement parallèle à, coaxial avec et se déplace dans la même direction que le faisceau de lumière transmis qui a été collecté par ledit premier objectif de microscope (226 410);
· un premier séparateur de faisceau (212; 405) réfléchissant partiellement les faisceaux de lumière transmis et réfléchis en direction d'un bras de détection (452) comportant:
- un détecteur (236 ; 428) qui peut recevoir les deux faisceaux de lumière réfléchis et transmis résultant de chacune des directions d'illumination du plan du spécimen.

2. Microscope selon la revendication 1, dans lequel ledit bras de détection (452) comprend en outre une petite ouverture (234 ; 426) et une lentille de focalisation (232; 424) pour obtenir un foyer pour une détection à foyer commun de la lumière réfléchie et transmise, de sorte que ledit microscope est un microscope à foyer commun.

3. Microscope selon la revendication 1 ou la revendication 2, dans lequel les moyens pour balayer (214 **;** 220) balayent le faisceau de lumière et dans lequel le sous-ensemble optique comprend en outre deux moyens de focalisation (703 ; 710) et dans lequel l'un des moyens de réflexion est un moyen de redressement (718), de sorte que ledit microscope est un microscope à faisceau explorateur.

4. Microscope selon la revendication 1 ou la revendication 2, dans lequel les moyens pour balayer (214; 220) sont des moyens pour translater le spécimen (412), de sorte que ledit microscope est un microscope à platine à déplacement programmé.

5. Microscope selon la revendication 3 ou la revendication 4, dans lequel la source lumineuse (202; 400) est une source lumineuse polarisée; et
ledit bras de détection (452) comprend en outre un premier analyseur (801; 422) ; et
ledit sous-ensemble optique dans ledit bras de transmission (650) comprend en outre une lame demi-onde (714 ; 420),
le faisceau de lumière ayant sa polarisation tournée de 90 degrés par la lame demi-onde de sorte que soit l'imagerie par réflexion, soit l'imagerie par transmission des deux côtés dudit spécimen (228; 412) peut être choisie en tournant ledit premier analyseur (802 ; 422).

6. Microscope selon la revendication 5, comprenant en outre :
- un second analyseur (804 ; 630), placé dans ledit sous-ensemble optique dans ledit bras de transmission (650) ;
où, en conjonction avec ladite lame demi-onde (714 ; 420), le déplacement de lumière peut être choisi soit dans ladite première direction, soit dans ladite seconde direction;
- un troisième analyseur (806; 632), placé entre ledit séparateur de faisceau (702 ; 406) et ledit premier objectif de microscope (226; 410);
où, en conjonction avec ledit premier analyseur dans ledit bras de détection du microscope, l'un quelconque de quatre modes d'imagerie peut être choisi : lumière réfléchie par dessus, lumière réfléchie par dessous, lumière transmise par dessus, lumière transmise par dessous.
